# EUROPÄISCHE PATENTSCHRIFT

(11) **EP 2 772 418 B1**
(45) Veröffentlichungstag und Bekanntmachung des Hinweises auf die Patenterteilung: **23.11.2016**
(21) Anmeldenummer: 14000718.8
(22) Anmeldetag: 28.02.2014
(51) Int. Cl.: B62D 33/02, B62D 33/08, B62D 21/14, B62D 21/20, B62D 63/06, B62D 21/09, B62D 53/06

(54) **Mittel zur Verbreiterung eines Transportmittels sowie Transportmittel**
Means to widen a transport device, and transport device
Dispositif pour élargir un moyen de transport et moyen de transport

(30) Priorität: 28.02.2013 DE 102013003317; 28.02.2013 DE 202013001898 U
(43) Veröffentlichungstag der Anmeldung: 03.09.2014
(73) Patentinhaber: Scheuerle Fahrzeugfabrik GmbH, 74629 Pfedelbach (DE)
(72) Erfinder: Hobusch, Matthias, 74629 Pfedelbach (DE)
(74) Vertreter: Leitner, Waldemar

(56) Entgegenhaltungen:
- US-A- 4 015 858
- US-A- 5 924 754
- US-A1- 2006 045 691
- US-A1- 2012 223 510

## Beschreibung

Die Erfindung betrifft Mittel zur Verbreiterung eines Transportmittels, sowie ein Transportmittel. Bei dem Transportmittel handelt es sich insbesondere um eine so genannte Baggerbrücke, die u.a. zum Transport von schweren Baumaschinen mit Überbreite eingesetzt werden kann und deren Ladeplattform dazu verbreitert werden muss.

Als Baggerbrücken werden Schwerlast-Transportmittel in Form eines tiefliegenden, teleskopierbaren oder nicht teleskopierbaren Brückenträgers mit einer Ladeplattform bezeichnet, die an ihrem vorderen und an ihrem hinteren Ende über eine entsprechende Kupplung verfügen, mittels derer sie in ein geeignetes, vorderes, mindestens einachsiges Fahrzeug, oder einen Schwanenhals und ein geeignetes, hinteres, mindestens einachsiges Fahrzeug eingekuppelt werden können.

Bei teleskopierbaren Baggerbrücken ist der Längs- oder Hauptträger mindestens zweiteilig ausgebildet und umfasst einen Außenträger, in Form eines Außenteleskops und mindestens einen in Bezug zum Außenträger in Fahrtrichtung des Transportmittels teleskopierbaren Innenträger, in Form eines Innenteleskops, der sich in unterschiedlichen Teleskopierstellungen arretieren lässt.

Um sicherzustellen, dass einerseits bei Leerfahrten oder beim Transport von Lasten mit einer Breite von weniger als 2550 mm keine Sondergenehmigung für die Baggerbrücke benötigt wird, andererseits aber auch ein Transport von Lasten mit einer Überbreite von mehr als 2550 mm, möglich ist, wie zum Beispiel ein Transport von breiten Raupenbaggern, sind bereits Mittel zur Verbreiterung der Ladeplattform der Baggerbrücke bekannt, die bei Bedarf an den zwei entgegengesetzten Seiten des Längs- oder Hauptträgers angebracht oder montiert werden können, um beiderseits des Längs- oder Hauptträgers eine zusätzliche Lastauflageflächen zu schaffen.

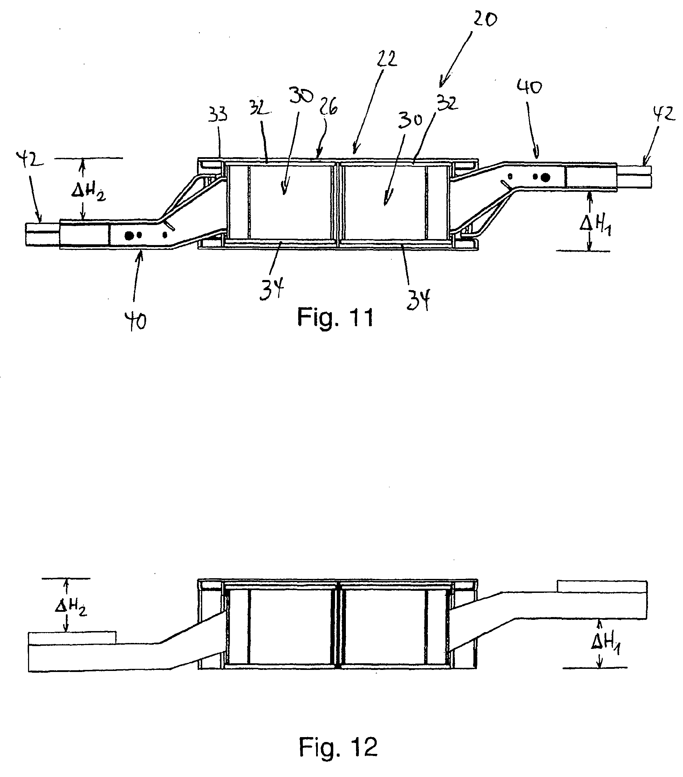

Bei einigen bekannten Transportmitteln der eingangs genannten Art in Form einer Baggerbrücke bestehen die Mittel zur Verbreiterung der Baggerbrücke aus klappbaren Auslegern, auf deren Oberseiten die Tragelemente aufgelegt und fixiert werden, so dass sie jeweils beiderseits des Längs- oder Hauptträgers eine in Längsrichtung der Baggerbrücke durchgehende, ebene Lastauflagefläche bilden. Die abnehmbaren Ausleger besitzen eine gekröpfte Form und sind in zwei Montageausrichtungen am Träger montierbar. In einer ersten Montageausrichtung, in der die Kröpfung nach oben weist, spannen die Oberseiten der auf die Ausleger aufgelegten Tragelemente mit der Oberseite des Längs- oder Hauptträgers eine Ebene auf, wie in Fig. 12 rechts dargestellt. In einer zweiten, um 180 Grad gedrehten Montageausrichtung der Ausleger, in der die Kröpfung nach unten weist, weisen die Oberseiten der auf den Auslegern liegenden Tragelemente eine geringere Höhe auf, wie in Fig. 12 links dargestellt.

Dadurch kann im Vergleich zur ersten Montageausrichtung die Ladehöhe der Tragelemente verkleinert und somit die nutzbare Transporthöhe vergrößert werden, sofern die Last ausschließlich beiderseits des Längs- oder Hauptträgers auf den Tragelementen abgestellt werden kann. Die Kröpfung der Ausleger ist auf das in Fig. 12 dargestellte Maß begrenzt, da eine stärkere Kröpfung der Ausleger dazu führen würde, dass entweder in der ersten Montageausrichtung der Ausleger die Tragelemente nach oben über die Oberseite des Längs- oder Hauptträgers oder in der zweiten Montageausrichtung der Ausleger deren Unterseiten nach unten über die Unterseite des Längs- oder Hauptträgers überstehen würden, was beides unerwünscht ist.

Um beim Durchfahren von Unterführungen oder Brücken die Höhe des Transportmittels einschließlich der Last so niedrig wie möglich zu halten, ist es von Vorteil, wenn in der zweiten Montageausrichtung der Ausleger die Lastauflagefläche weiter abgesenkt und dadurch die maximale Ladehöhe der Last weiter vergrößert werden kann. Außerdem ist es auch von Vorteil, wenn in der ersten Montageausrichtung der Ausleger die lichte Höhe von deren Unterseiten über dem Untergrund vergrößert werden kann, da sich dann zum Beispiel beim Durchfahren einer engen Kurve die Ausleger an der Kurveninnenseite besser über eine Fahrbahnbegrenzung, wie zum Beispiel eine Leitplanke, hinweg bewegen können.

Die Tragelemente bestehen bei den bekannten Transportmitteln der eingangs genannten Art entweder aus einem durch Schweißen aus dünnem Stahlblech hergestellten flachen Kasten oder aus verschweißten Hohlprofilen, auf deren O-berseiten hölzerne Auflagen aufgeschraubt sind. In beiden Fällen beträgt das Gewicht der Tragelemente zwischen 500 und 700 N, wodurch das Aufrüsten der Baggerbrücke beim Verbreitern der Ladeplattform sowie das Abrüsten beim Rückbau erheblich erschwert werden.

Aus der US 2006/0045691 A1 ist ein Mittel zur Verbrelterung eines Transportmittels bekannt, das eine Mehrzahl von gekröpften Auslegern, die an entgegengesetzten Selten eines Trägers des Transportmittels in Abstand voneinander montierbar sind, so dass sie seitwärts über den Träger überstehen, sowie mit einer Mehrzahl von Baggerelementen, die sich jeweils zwischen benachbarten Auslegern einsetzen lassen, bekannt.

Ausgehend hiervon liegt der Erfindung die Aufgabe zugrunde, Mittel zur Verbreiterung eines Transportmittels der eingangs genannten Art, insbesondere einer Baggerbrücke, sowie ein Transportmittel der eingangs genannten Art dahingehend zu verbessern, dass sich in der zweiten Montageausrichtung der gekröpften Ausleger die maximale Ladehöhe der Last bzw. in der ersten Montageausrichtung der Ausleger die lichte Höhe von deren Unterseiten über dem Untergrund vergrößern lässt.

Diese Aufgabe, nämlich die Vergrößerung der maximalen Ladehöhe in der zweiten Montageausrichtung der Ausleger bzw. die Vergrößerung der lichten Höhe der Unterseiten der Ausleger in der ersten Montageausrichtung, wird gemäß einer ersten Erfindungsvariante dadurch gelöst, dass die Ausleger ein I-Profil mit zwei beiderseits von einem Mittelsteg angeordneten, nach entgegengesetzten Seiten offenen rinnenförmigen Ausnehmungen umfassen, so dass sich die Tragelemente einzeln mit ihren entgegengesetzten Enden von außen her in die gegenüberliegenden Ausnehmungen zweier benachbarter Ausleger einschieben lassen.

Eine bevorzugte Weiterbildung der Erfindung sieht vor, dass die Ausleger einstückig ausgebildet und mit dem Träger, d.h. dem Längs- oder Hauptträger des Transportmittels in zwei verschiedenen Montageausrichtungen verbindbar sind, in denen die Oberseiten der in die Ausnehmungen eingeschobenen Tragelemente unterschiedliche Höhen aufweisen.

Da die Tragelemente weder in der ersten noch in der zweiten Montageausrichtung der Ausleger auf deren Oberseiten aufgelegt sondern zwischen benachbarte Ausleger eingeschoben werden, kann durch die obige Merkmalskombination zum einen in der zweiten Montageausrichtung der Ausleger, im Vergleich zu dem in Fig. 12 dargestellten Stand der Technik, die Oberseite der Tragelemente um deren Höhe nach unten verlegt werden. Dadurch lässt sich die maximale Ladehöhe um die Höhe der Tragelemente vergrößern, ohne dass die Höhenabmessungen der Ausleger verkleinert und damit deren Tragfähigkeit beeinträchtigt wird. Zum anderen kann die Kröpfung der Ausleger etwas verstärkt werden, wodurch in der ersten Montageausrichtung der Ausleger die lichte Höhe zwischen deren Unterseite und dem Untergrund vergrößert werden kann.

Eine andere bevorzugte Weiterbildung der Erfindung sieht vor, dass die Ausleger in beiden Montageausrichtungen formschlüssig mit dem Träger des Transportmittels verbindbar sind, wobei die formschlüssige Verbindung ein Verdrehen der Ausleger um eine vertikale Achse im Bereich ihrer Befestigung verhindert, ohne dass zu diesem Zweck weitere Maßnahmen erforderlich sind,

Vorteilhaft umfassen die gekröpften Ausleger einen mit den rinnenförmigen Ausnehmungen versehenen geraden Aufnahmeteil, der die Enden zweier benachbarter Tragelemente aufnimmt, einen Befestigungsteil, der in beiden Montageausrichtungen des Auslegers lösbar mit dem Träger des Transportmittels verbindbar ist, und einen dazwischen angeordneten Abstützteil, über den sich der Aufnahmeteil gegen den Träger abstützt, wobei der Abstützteil zweckmäßig starr mit dem Aufnahmeteil und dem Befestigungsteil verbunden und zur Erzielung der Kröpfung in Bezug zum Aufnahmeteil geneigt ist.

Während der gerade Aufnahmeteil stets als I-Profil ausgebildet ist, um das Einschieben der Tragelemente zwischen die beiden Aufnahmeteile der benachbarten Ausleger zu ermöglichen braucht der Abstützteil nicht notwendigerweise ein I-Profil aufweisen, da er nicht zum Einschieben der Tragelemente dient. Weil jedoch I-Profile in Richtung des Mittelstegs eine hohe Steifigkeit besitzen, ist der geneigte Abstützteil zweckmäßig ebenfalls als I-Profil ausgebildet.

Dort, wo der Träger des Transportmittels ein teleskopierbarer Träger mit einem Innen- und Außenträger ist, sind die beiden Halterungen zum Befestigen der Ausleger gemäß einer weiteren bevorzugten Weiterbildung der Erfindung sowohl am Innen- und Außenträger ausgebildet, so dass die Ausleger bei der Montage formschlüssig sowohl mit dem Innen- und Außenträger verbunden werden.

Damit sich der Befestigungsteil in beiden Montageausrichtungen lösbar mit dem Träger des Transportmittels verbinden lässt, weist er vorteilhaft einen nach oben und einen nach unten überstehenden Vorsprung auf, der beim Verbinden des Auslegers mit dem Träger in einer oberen bzw. einer unteren Halterung des Trägers aufgenommen wird.

Die beiden Vorsprünge sind vorzugsweise so geformt, dass sie sich ohne die Notwendigkeit von weiteren beweglichen Teilen in die zugehörige Halterung einführen lassen, indem der Ausleger in einer geneigten Ausrichtung des Befestigungsteils an den Träger angenähert wird, um in dieser Ausrichtung zuerst den nach oben überstehenden Vorsprung von unten her so weit wie möglich in die obere Halterung einzuführen, indem danach der Ausleger verschwenkt wird, um den nach unten überstehenden Vorsprung über die untere Halterung zu bewegen, und indem zuletzt der Ausleger etwas abgesenkt wird, bis der nach unten überstehende Vorsprung nach unten in die untere Halterung ragt und sich der Ausleger auf der unteren Halterung abstützt. In diesem Zustand hintergreift der nach oben überstehende Vorsprung noch immer das Widerlager der oberen Halterung.

Während die untere Halterung zur Aufnahme der in den Ausleger eingeleiteten Gewichtskräfte der Last und der unteren Lagerkraft dient, die aus dem am Ausleger wirkenden Lastmoment resultiert, dient die obere Halterung zur Aufnahme der oberen Lagerkraft, die aus dem am Ausleger wirkenden Lastmoment, resultiert.

Daher ist die untere Halterung zweckmäßig so ausgebildet, dass der Ausleger nach der Montage auf der unteren Halterung aufliegt, sich von oben gegen die untere Halterung abstützt und der untere Vorsprung von oben her in die untere Halterung ragt, während die obere Halterung so ausgebildet ist, dass der obere Vorsprung ein stabiles Widerlager an ihrer vom Träger abgewandten Seite hintergreift, um die auf den Ausleger einwirkenden Lastmomente in den Träger einzuleiten.

Zweckmäßig sind die beiden Vorsprünge spiegelsymmetrisch zu einer vertikalen Mitte des Abstütz- und/oder Befestigungsteils, so dass sie sich in beiden Montageausrichtungen in gleicher Weise mit den Halterungen in Eingriff bringen lassen.

Die formschlüssige Verbindung zwischen dem Ausleger und dem Träger wird bevorzugt dadurch erzielt, dass die beiden Vorsprünge und die zur Aufnahme der Vorsprünge dienenden Halterungen jeweils einen unrunden komplementären Querschnitt besitzen.

Um unterschiedliche Breiteneinstellungen der Baggerbrücke vornehmen zu können, lassen sich die in die Ausnehmungen eingeschobenen Tragelemente in mindestens zwei und besser noch in drei unterschiedlichen Abständen vom Hauptträger fixieren.
Dazu werden bevorzugt Fixiereinrichtungen verwendet, die zwei Öffnungen an den entgegengesetzten Enden der Tragelemente, mindestens zwei in unterschiedlichen Abständen vom Träger im Mittelsteg von jedem Ausleger angeordnete Durchtrittsöffnungen sowie eine Mehrzahl von Fixierbolzen umfassen, welche sich jeweils durch zwei Öffnungen von benachbarten Tragelementen und durch eine mit diesen fluchtende Durchtrittsöffnung des Mittelstegs eines zwischen den Tragelementen befindlichen Auslegers hindurch stecken lassen.

Eine weitere vorteilhafte Weiterbildung der Erfindung sieht zur Erleichterung der Handhabung der Tragelemente vor, dass die Tragelemente in Leichtbauweise aus Leichtmetall oder aus einem faserverstärkten Kunststoff hergestellt sind.

Um trotz der Gewichtsreduzierung eine hohe Tragfähigkeit und Verformungsbeständigkeit der Tragelemente zu gewährleisten, sind diese bevorzugt in Sandwich-Bauweise hergestellt und umfassen eine Schicht aus einem geschäumten Werkstoff zwischen mindestens zwei Deckschichten.

Die Tragelemente können entweder aus Leichtmetall oder aus Kunststoff hergestellt werden, wobei im zuerst genannten Fall der geschäumte Werkstoff ein Leichtmetallschaum ist und die Deckschichten Leichtmetallplatten sind, während im zuletzt genannten Fall der geschäumte Werkstoff ein Hartschaum ist, während die Deckschichten aus einem faserverstärkten Kunststoff bestehen, zweckmäßig einem durch Glasfasern, Kohlefasern oder Kevlarfasern verstärkter Kunststoff. Um die Druckfestigkeit der Tragelemente zu erhöhen, ist der geschäumte Werkstoff bevorzugt von einem Rahmen umgeben, der starr mit beiden Deckschichten verbunden ist.

Wenn die Höhe der Tragelemente zur weiteren Gewichtsreduzierung zweckmäßig kleiner als die Höhe der Ausnehmungen der Ausleger ist, sind an den Unterseiten der beiden entgegengesetzten Enden der Tragelemente bevorzugt nach unten überstehende Leisten oder Vorsprünge angebracht, deren Höhe geringfügig kleiner ist als die Differenz zwischen der Höhe der Ausnehmungen der Ausleger und der Höhe der Tragelemente. Dadurch wird verhindert, dass es zwischen den Oberseiten der Tragelemente und den Oberseiten der Ausleger zu einer Höhendifferenz kommt.

Im Folgenden wird die Erfindung anhand eines in der Zeichnung dargestellten Ausführungsbeispiels näher erläutert.
Fig. 1 zeigt eine teilweise weg geschnittene perspektivische Ansicht von Teilen eines erfindungsgemäßen Transportmittels in Form einer Baggerbrücke mit verstellbarer Breite;
Fig. 2 zeigt eine Oberseitenansicht der Fig. 1 dargestellten Teile des Transportmittels;
Fig. 3 zeigt eine vergrößerte, teilweise weg geschnittene perspektivische Ansicht eines Ausschnitts aus Fig. 1 mit zwei gekröpften Auslegern und einem zwischen den Auslegern angeordneten Tragelement in einer ersten Montageausrichtung der Ausleger;
Fig. 4 zeigt eine andere vergrößerte, teilweise weg geschnittene perspektivische Ansicht des Ausschnitts aus Fig. 3, jedoch in einer zweiten Montageausrichtung der Ausleger;
Fig. 5 zeigt eine vergrößerte, teilweise weg geschnittene perspektivische Ansicht von einem der gekröpften Ausleger in der ersten Montageausrichtung der Ausleger gemäß Fig. 3;
Fig. 6 zeigt eine vergrößerte, teilweise weg geschnittene perspektivische Ansicht von einem der gekröpften Ausleger in der zweiten Montageausrichtung der Ausleger gemäß Fig. 4;
Fig. 7 zeigt eine vergrößerte, teilweise weg geschnittene perspektivische Oberseitenansicht einer zur Befestigung eines Auslegers dienenden Halterung und eines in der Halterung befestigten Auslegers;
Fig. 8 zeigt eine vergrößerte, teilweise weg geschnittene perspektivische Unterseitenansicht der Halterung und des in der Halterung befestigten Auslegers;
Fig. 9 zeigt eine vergrößerte perspektivische Ansicht von einem der Tragelemente;
Fig. 10 zeigt eine andere vergrößerte perspektivische Ansicht des Tragelements aus Fig. 9;
Fig. 11 zeigt eine Querschnittsansicht der Baggerbrücke, wobei die Ausleger auf den entgegensetzten Seiten des Längs- oder Hauptträgers zur Erläuterung von unterschiedlichen Höhenniveaus einer von den Oberseiten der Tragelemente gebildeten Ladefläche in unterschiedlichen Montageausrichtungen dargestellt sind;
Fig. 12 zeigt eine entsprechende Querschnittsansicht einer Baggerbrücke gemäß dem Stand der Technik zur Erläuterung der Unterschiede.

Bei dem in der Zeichnung nur teilweise dargestellten Transportmittel 20 handelt es sich um eine so genannte Baggerbrücke, d.h. eine zur Aufnahme der Last dienende tiefliegende Ladeplattform 22, deren Breite an die Breite der Last angepasst werden kann.

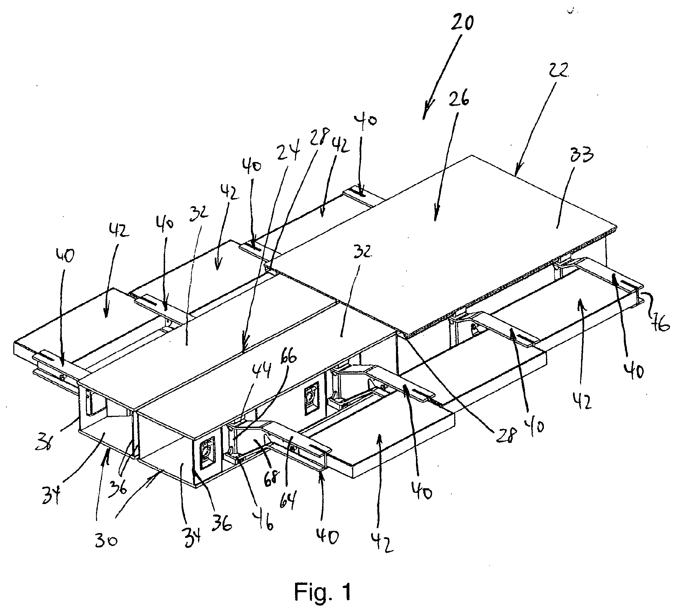

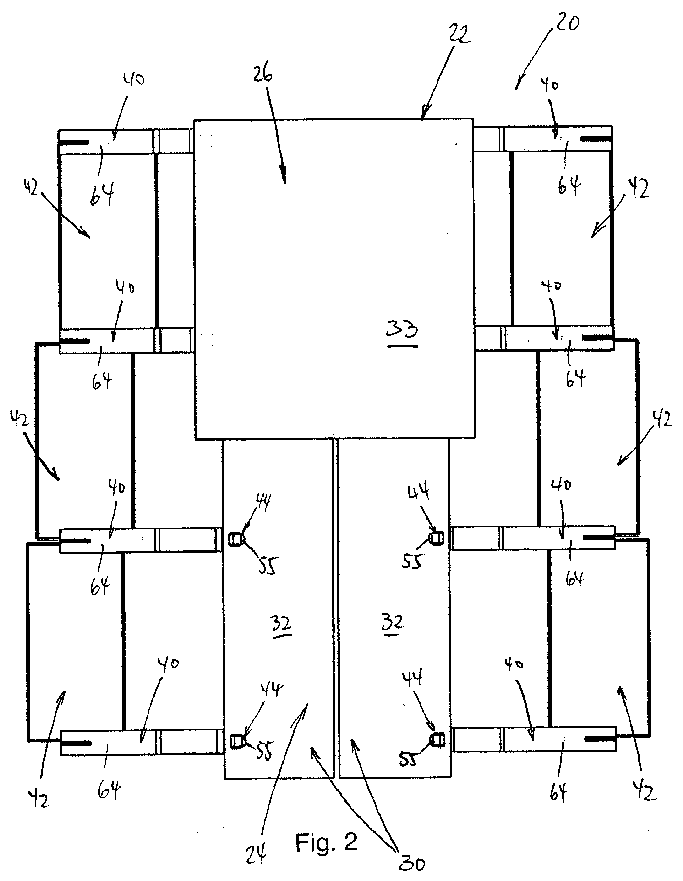

Wie am besten in den Figuren 1 und 2 dargestellt, die einen Abschnitt der Tiefbett-Ladeplattform 22 zeigen, besteht diese letztere hauptsächlich aus einem langgestreckten, im dargestellten Fall einfach teleskopierbar ausgeführten Längsoder Hauptträger 24, der an seinem vorderen und an seinem hinteren Ende über eine entsprechende Kupplung verfügt, mittels derer er in ein geeignetes, vorderes, mindestens einachsiges Fahrzeug, oder einen Schwanenhals und ein geeignetes, hinteres, mindestens einachsiges Fahrzeug eingekuppelt werden kann.

Bei dem dargestellten, teleskopierbaren Transportmittel 20 besteht der Längsoder Hauptträger 24 im vorderen Teil aus einem Paar Kastenträger 30, welche im Bereich der vorderen, nicht dargestellten, Kupplung fest miteinender verbunden sind, und im hinteren Teil aus einem Doppel-Kastenträger 26, in den das Paar Kastenträger 30 teleskopisch eingeschoben und in mehreren Positionen mit dem Doppel-Kastenträger 26 verbolzt werden kann.

Zum Transport einer fahrbaren Baumaschine mit Überbreite und einer Spurweite, die größer ist als die Breite des Längs- oder Hauptträgers 24, wie zum Beispiel eines breiten Raupenbaggers mit einer Spurweite von 2700 mm, lässt sich die Ladeplattform 22 bei Bedarf verbreitern, indem an beiden Seiten des Längs- oder Hauptträgers 24 in Längsrichtung des Transportmittels 20 in gleichen Abständen voneinander eine Mehrzahl von seitlich überstehenden Auslegern 40 angebracht wird, von denen in der Zeichnung nur einige dargestellt sind, und indem zwischen die benachbarten Ausleger 40 Tragelemente 42 eingesetzt werden, welche die Lücken zwischen den Auslegern 40 überbrücken.

Ohne die Verwendung der Ausleger 40 und der in den geraden Aufnahmeteil 64 eingeschobenen Tragelemente 42, dient die ebene Oberseite des Längs- oder Hauptträgers 24 als Lastauflagefläche, auf die eine Last, z.B. ein Kettenbagger, direkt aufgelegt werden kann.

Zur Montage der Ausleger 40 ist der Längs- oder Hauptträger 24 an den beiden entgegengesetzten äußeren Seitenwänden 36 der beiden Kastenträger 30 und des Doppel-Kastenträgers 26 jeweils mit paarweise übereinander angeordneten Halterungen 44, 46 versehen.

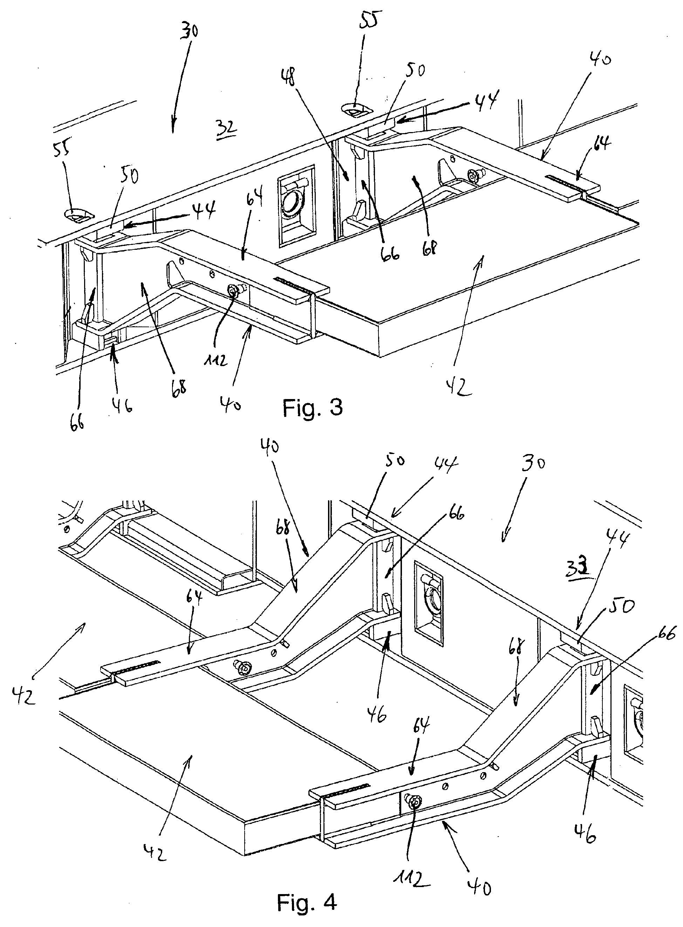

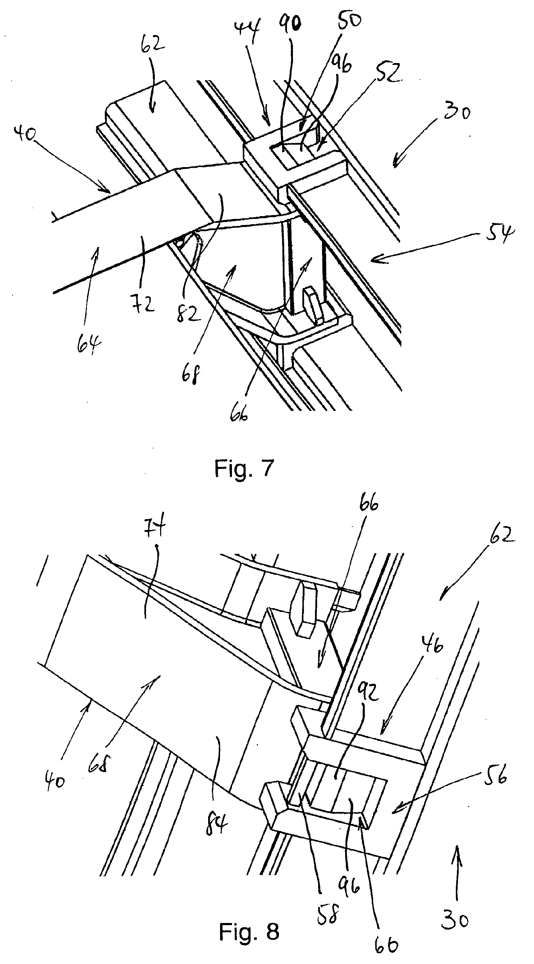

Wie am besten in den Figuren 3 und 4 sowie 7 dargestellt, umfasst die obere Halterung 44 einen aus einem Stück Flachstahl hergestellten Bügel 50 mit einem eckigen U-förmigen Umriss, der im dargestellten Fall einer teleskopierbaren Baggerbrücke von unten her am überstehenden Rand von oberen Deckblechen 32 der beiden Kastenträger 30 angeschweißt ist, wobei das Joch des Bügels 50 vom Träger 24 weg nach außen weist. Wie in Fig. 7 dargestellt, umgibt der Bügel 50 eine im Querschnitt rechteckige Aufnahmeöffnung 52. Außerdem kann der Rand des oberen Deckblechs 33 des äußeren Doppel-Kastenträgers 26 an der Unterseite durch ein L-Profil 54 verstärkt sein, das im Bereich der oberen Halterung 44, mit einer Ausnehmung versehen ist, in die der Bügel 50 eingeschweißt ist. Wie nur in Fig. 1 und 3 dargestellt, ist das obere Deckblech 32 der beiden Kastenträger 30 oberhalb von der Aufnahmeöffnung 52 jeder Halterung 44 mit einer Aussparung 55 versehen.

Wie am besten in Fig. 8 dargestellt, umfasst die untere Halterung 46 ebenfalls einen Bügel 56, der jedoch etwas höher ist als der Bügel 50 der oberen Halterung 44 und der in einer umgekehrten Ausrichtung wie der obere Bügel 50 an der Oberseite eines unteren Deckblechs 34 (in Fig. 8 nicht dargestellt) der beiden Kastenträger 30 des Längs- oder Hauptträgers 24 angeschweißt ist, so dass das Joch des Bügels 56 in Richtung des benachbarten Kastenträgers 30 weist. Die beiden Schenkel des Bügels 56 sind in der Nähe der Unterseite des Bügels 56 durch einen flachen Steg 58 verbunden, der zusammen mit dem Bügel 56 eine im Querschnitt rechteckige Aufnahmeöffnung 60 umgibt. Auch hier kann der Rand eines unteren Deckblechs des äußeren Doppel-Kastenträgers 26 an der Oberseite durch ein L-Profil 62 verstärkt sein, das im Bereich der unteren Halterung 46 mit einer Ausnehmung versehen ist, in die der Bügel 56 eingeschweißt ist.

Wie am besten in den Figuren 1, 3 bis 6 und 11 dargestellt, sind die Ausleger 40 einstückig ausgebildet und bestehen im Wesentlichen aus einem geraden Aufnahmeteil 64 zur Aufnahme der einander zugewandten Enden von zwei benachbarten Tragelementen 42, einem Befestigungsteil 66 zur Befestigung der Ausleger 40 an zwei übereinanderliegenden Halterungen 44 und 46 des Längs- oder Hauptträgers 24, und einem zwischen dem Aufnahmeteil 64 und dem Befestigungsteil 66 angeordneten Abstützteil 68. Nach der Montage der Ausleger 40 halten die Abstützteile 68 die Aufnahmeteile 64 in einer zum Untergrund und zur Deckplatte 26 parallelen Ausrichtung und leiten die über die Tragelemente 42 auf die Aufnahmeteile 64 einwirkenden Lasten in die Halterungen 44 und 46 und damit in den Längs- oder Hauptträger 24 ein.

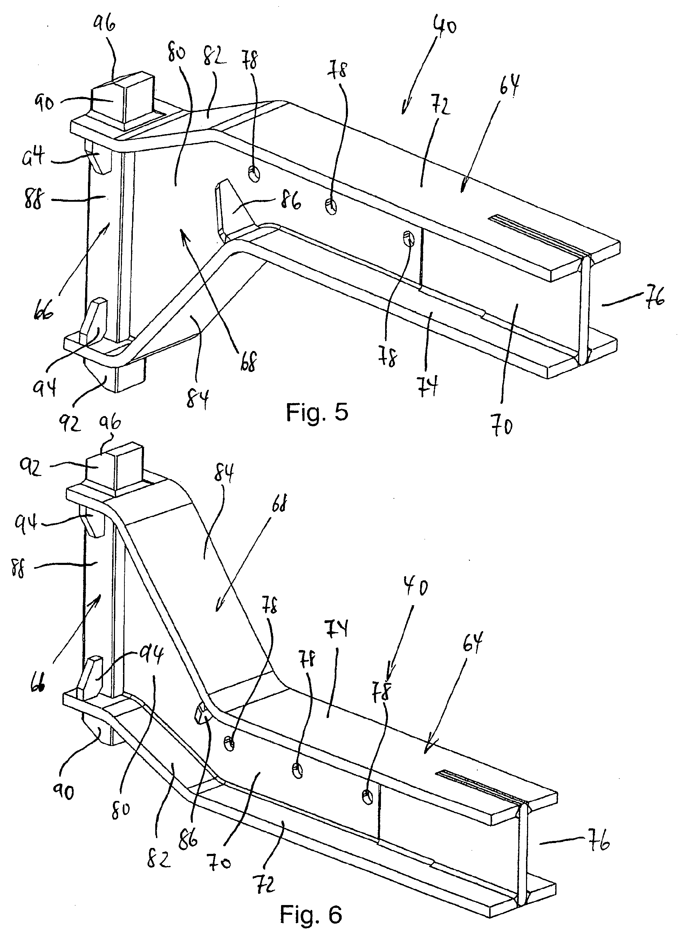

Wie am besten in den Figuren 5 und 6 dargestellt, ist der gerade Aufnahmeteil 64 jedes Auslegers 40 als I-Profil mit einem allgemein konstanten spiegelsymmetrischen Querschnitt ausgebildet. Das I-Profil besteht aus einem vertikalen Mittelsteg 70, einem mit einer Kante des Mittelstegs verschweißten, zum Mittelsteg senkrechten ersten Quersteg 72 und einem mit der anderen Kante des Mittelstegs verschweißten, zum ersten Quersteg 72 parallelen zweiten Quersteg 74. Der Mittelsteg 70 und die beiden Querstege 72, 74 begrenzen beiderseits des Mittelstegs 70 eine vom Mittelsteg 70 weg offene rinnenförmige Ausnehmung 76 mit einem allgemein konstanten Rechteckquerschnitt. In der Nähe des Abstützteils 68 ist der Mittelsteg 70 mit drei im Abstand voneinander angeordneten Durchtrittsbohrungen 78 versehen.

Der Abstützteil 68 jedes Auslegers 40 ist ebenfalls als I-Profil ausgebildet, dessen Mittelsteg 80 und Querstege 82, 84 in Verlängerung des Mittelstegs 70 bzw. des entsprechenden Querstegs 72, 74 des Aufnahmeteils 64 angeordnet sind, wobei jedoch die Höhe des Mittelstegs 80 vom Aufnahmeteil 64 bis zum Befestigungsteil 66 zunimmt und wobei die beiden Querstege 82, 84 mit unterschiedlich großen Neigungswinkeln in Richtung des Befestigungsteils 66 hin gebogen sind. Dadurch besitzt der Ausleger 40 eine gekröpfte Gestalt, während der Querschnitt des Abstützteils 68 in Richtung des Befestigungsteils 66 zunimmt. Am Übergang zwischen dem Aufnahmeteil 64 und dem Abstützteil 68 sind Versteifungsbleche 86 beiderseits des Mitteilstegs 70, 80 in die Ecke zwischen diesem und dem stärker geneigten bzw. stärker abgebogenen Quersteg 84 eingeschweißt.

Der Befestigungsteil 66 besteht im Wesentlichen aus einem Befestigungszapfen 88 mit rechteckigem Querschnitt, der parallel zum Mittelsteg 70, 80 ausgerichtet ist und sich entlang des vom Aufnahmeteil 64 abgewandten Endes des Abstützteils 68 erstreckt, wobei er die beiden Querstege 82, 84 durchsetzt, so dass seine entgegengesetzten Enden 90, 92 jeweils ein Stück weit nach oben bzw. unten über den benachbarten Quersteg 82, 84 überstehen.

Der Befestigungszapfen 88 ist über die gesamte Höhe des Mittelstegs 80 sowie im Bereich der Querstege 82, 84 mit dem Abstützteil 68 verschweißt. Zwischen den beiden Querstegen 82, 84 sind Versteifungsbleche 94 in die Ecken zwischen jedem Quersteg 82, 84 und den benachbarten, zum Mittelsteg 80 parallelen Seiten des Befestigungszapfens 88 eingeschweißt. Die beiden überstehenden Enden 90, 92 sind spiegelsymmetrisch zur Mitte des Befestigungszapfens 88 und sind zwischen ihren ebenen, zur Längsachse des Befestigungszapfens 88 senkrechten Stirnflächen und ihren vom Aufnahmeteil 64 abgewandten Seiten mit einer ebenen Abschrägung 96 versehen.

Durch die Kröpfung der Ausleger 40 und die spiegelsymmetrische Ausbildung der Befestigungszapfen 88 kann jeder Ausleger 40 in zwei verschiedenen Montageausrichtungen am Längs- oder Hauptträger 24 montiert werden, wie in Fig. 3 und 4 bzw. 11 dargestellt. In beiden Montageausrichtungen sind die Aufnahmeteile 64 der Ausleger 40 parallel zum Untergrund und zu den oberen Deckblechen 32, 33 ausgerichtet, wobei in einer ersten Montageausrichtung ihre Oberseiten etwa mit den Oberseiten der oberen Deckbleche 32, 33 des Längs- oder Hauptträgers 24 fluchten, wie in Fig. 3 und Fig. 11 rechts dargestellt, während in einer zweiten Montageausrichtung ihre Unterseiten etwa mit der Unterseite des Längs- oder Hauptträgers 24 fluchten, wie in Fig. 4 und Fig. 11 links dargestellt.

In beiden Montageausrichtungen bilden die Oberseiten der Tragelemente 42 und der Aufnahmeteile 64 der Ausleger 40 auf jeder Seite des Längs- oder Hauptträgers 24 eine durchgehende Lastauflagefläche. Die Lastauflagefläche kann in unterschiedlichen Abständen vom Längs- oder Hauptträger 24 angeordnet werden, indem die Tragelemente 42 mehr oder weniger weit in die Ausnehmungen 76 der Aufnahmeteile 64 der Ausleger 40 eingeschoben werden, wie in Fig. 1 und 2 dargestellt.

Bei der Montage der Ausleger 40 werden die beiden überstehenden Enden 90, 92 der Befestigungszapfen 88 jeweils in eine obere und eine untere Halterung 44 bzw. 46 am Längs- oder Hauptträger 24 eingeführt. Dabei wird der Befestigungszapfen 88 an den Längs- oder Hauptträger 24 in einer geneigten Ausrichtung angenähert, in der das obere Ende 90 bzw. 92 dem Längs- oder Hauptträger 24 näher ist. In dieser Ausrichtung wird dann das überstehende obere Ende 90 bzw. 92 des Befestigungszapfens 88 von unten in die Aufnahmeöffnung 52 der oberen Halterung 44 eingeführt, bis der obere Quersteg 82 des Abstützteils 68 von unten gegen den unteren Rand des Bügels 50 anschlägt. Danach wird der gesamte Ausleger 40 etwas verschwenkt, um das nach unten überstehende Ende 92 bzw. 90 des Befestigungszapfens 88 über den Steg 58 hinweg bis über die Aufnahmeöffnung 60 der unteren Halterung 46 zu bewegen. Zuletzt wird der Ausleger 40 bei vertikaler Ausrichtung des Befestigungszapfens 88 etwas abgesenkt, bis das Ende 92 bzw. 90 des Befestigungszapfens 88 von oben in die Aufnahmeöffnung 60 ragt und sich der untere Quersteg 82 bzw. 84 des Abstützteils 66 auf der ebenen Oberseite des Bügels 56 abstützt. In diesem Zustand kann sich der Ausleger 40 nicht von selbst aus den Halterungen 44, 46 heraus bewegen.

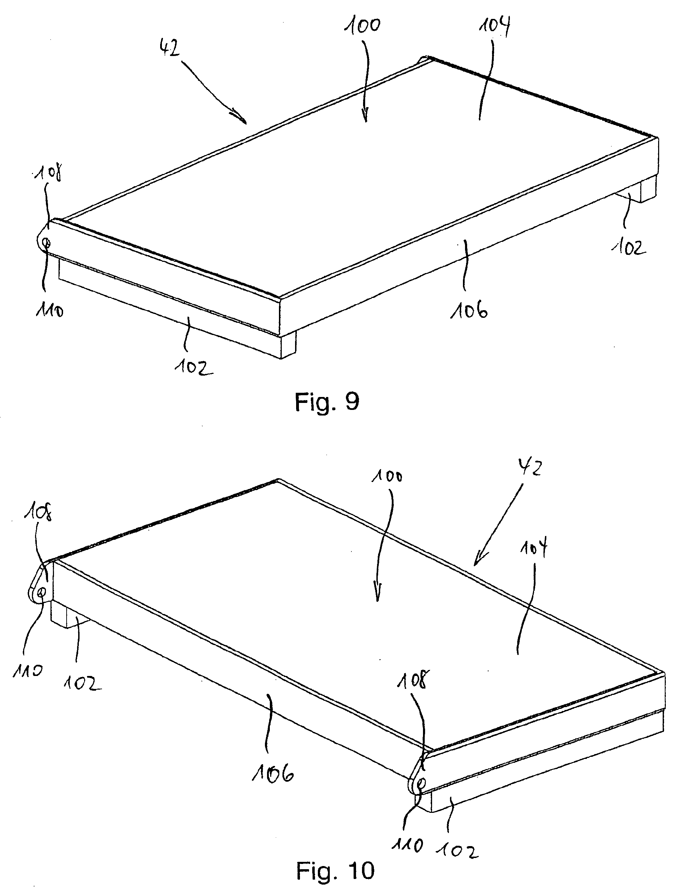

Wie am besten in den Figuren 9 und 10 dargestellt, bestehen die Tragelemente 42 aus einem flachen quaderförmigen Tragteil 100 und zwei Leisten 102, die an den entgegengesetzten Enden des Tragteils 100 an dessen Unterseite befestigt sind. Der Tragteil 100 besteht aus einer Sandwich-Konstruktion, die eine obere und eine untere Deckplatte 104 aus Aluminiumblech oder einem Faserverbundmaterial, eine dazwischen angeordnete Schicht aus Aluminiumschaum oder Hartschaum (nicht sichtbar), sowie einen die Sandwich-Konstruktion umgebenden Rahmen 106 aus Aluminiumblech oder einem Faserverbundmaterial umfasst. Die beiden an den Enden des Tragteils 100 angeordneten Teile des Rahmens 106 weisen überstehende Enden 108 auf, die als Augen mit einer Bohrung 110 ausgebildet sind und zur Fixierung des Tragelements 42 in den benachbarten Auslegern 40 dienen.

Nach der Montage der Ausleger 40 werden die Tragelemente 42 jeweils von außen her zwischen zwei benachbarte Ausleger 40 eingeschoben, wie zum Beispiel in den Figuren 1, 3 und 4 dargestellt. Dabei werden die beiden entgegengesetzten Enden jedes Tragelements 42 in zwei gegenüberliegende rinnenförmige Ausnehmungen 76 zweier benachbarter Ausleger 40 eingeführt. Nach dem Einschieben der Tragelemente 42 liegen die beiden Leisten 102 auf den nach unten weisenden Querstegen 72 bzw. 74 des Aufnahmeteils 64 auf, während die nach oben weisenden Querstege 74 bzw. 72, die Oberseiten der Tragelemente 42 an deren Enden übergreifen, so dass die Lastauflagefläche dort um wenige Millimeter höher als im bereich der Tragelemente 42 ist.

Sämtliche Tragelemente 42 werden so weit in die Ausnehmungen benachbarter Ausleger 40 einschoben, bis sie einen von drei möglichen Abständen vom Längs- oder Hauptträger 24 / 26 aufweisen, in dem die Bohrungen 110 der beiden überstehenden Enden 108 der stirnseitigen Teile des Rahmens 106 sämtlicher Tragelemente 42 mit einer der drei Durchtrittsöffnungen 78 im Mittelsteg 70 der jeweils benachbarten Ausleger 40 fluchten. In diesem Zustand werden Fixierbolzen 112 von einer Seite her durch eine Bohrung 110 eines Tragelements 42, die benachbarte Durchtrittsöffnung 78 und eine benachbarte Bohrung 110 des nächsten Tragelements 42 hindurch geschoben und gesichert, um die Tragelemente 42 in der gewünschten Position zu fixieren.

Wie aus einem Vergleich der Figuren 11 und 12 ersichtlich ist, kann durch das Einschieben der Tragelemente 42 in die I-Profile der Ausleger 40 im Vergleich zum Stand der Technik in der in Fig. 11 und 12 rechts dargestellten ersten Montageausrichtung die Höhendifferenz ΔH₁ zwischen der Unterseite der Ausleger 40 und der Unterseite des Längs- oder Hauptträgers 24 und in der links dargestellten zweiten Montageausrichtung die Höhendifferenz ΔH₂ zwischen dem verbreiterten Teil der Lastauflagefläche und der Oberseite des Längs- oder Hauptträgers 24 und damit die maximale Ladehöhe der Tragelemente verkleinert und somit die nutzbare Transporthöhe vergrößert werden.

## Patentansprüche

1. Mittel zur Verbreiterung eines Transportmittels, mit einer Mehrzahl von gekröpften Auslegern, die an entgegengesetzten Seiten eines Trägers des Transportmittels im Abstand voneinander montierbar sind, so dass sie seitwärts über den Träger überstehen, sowie mit einer Mehrzahl von Tragelementen, die sich jeweils zwischen zwei benachbarte Ausleger einsetzen lassen, **dadurch gekennzeichnet, dass** die Ausleger (40) ein I-Profil mit zwei beiderseits von einem Mittelsteg (70) angeordneten, nach entgegengesetzten Seiten offenen rinnenförmigen Ausnehmungen (76) umfassen, und dass sich die Tragelemente (42) mit ihren entgegengesetzten Enden von außen her in die gegenüberliegenden Ausnehmungen (76) zweier benachbarter Ausleger (40) einschieben lassen.

2. Mittel nach Anspruch 1, **dadurch gekennzeichnet, dass** die Ausleger (40) einstückig ausgebildet und in zwei verschiedenen Montageausrichtungen mit dem Träger (24) des Transportmittels (20) verbindbar sind, in denen die Oberseiten der Tragelemente (42) jeweils unterschiedliche Höhen aufweisen.

3. Mittel nach Anspruch 1 oder 2, **dadurch gekennzeichnet, dass** die Ausleger (40) einen Befestigungsteil (66) aufweisen, der formschlüssig mit dem Träger (24) verbindbar ist.

4. Mittel nach Anspruch 3, **dadurch gekennzeichnet, dass** der Befestigungsteil (66) einen nach oben und einen nach unten überstehenden Vorsprung (90, 92) mit einen unrunden Querschnitt umfasst, wobei beim Verbinden des Auslegers (40) mit dem Träger (24) der nach oben überstehende Vorsprung in einer oberen Halterung (44) und der nach unten überstehende Vorsprung (92) in eine untere Halterung (46) des Trägers (24) mit einem komplementären unrunden Öffnungsquerschnitt aufgenommen wird.

5. Mittel nach einem der vorangehenden Ansprüche, **gekennzeichnet durch** Fixiereinrichtungen zur Fixierung der in die Ausnehmungen (76) eingeschobenen Tragelemente (42) in mindestens zwei unterschiedlichen Abständen vom Träger (24).

6. Mittel nach Anspruch 5, **dadurch gekennzeichnet, dass** die Fixiereinrichtungen Durchtrittsöffnungen (110) an den entgegengesetzten Enden der Tragelemente (42), mindestens zwei in unterschiedlichen Abständen vom Träger (24) angeordnete weitere Durchtrittsöffnungen (78) in einem die Ausnehmungen (76) begrenzenden Mittelsteg (70) von jedem Ausleger (40), sowie eine Mehrzahl von Fixierbolzen (112) umfassen, die sich durch zwei Durchtrittsöffnungen (110) von benachbarten Tragelementen (42) und eine dazwischen angeordnete weitere Durchtrittsöffnung (78) hindurch stecken lassen.

7. Mittel nach einem der vorangehenden Ansprüche, **dadurch gekennzeichnet, dass** die Höhe der Tragelemente (42) zwischen den Auslegern (40) kleiner ist als die Höhe der Ausnehmungen (76) der Ausleger (40) und dass an den Unterseiten der entgegengesetzten Enden der Tragelemente (42) nach unten überstehende Leisten (102) oder Vorsprünge angebracht sind, deren Höhe geringfügig kleiner ist als die Differenz zwischen der Höhe der Ausnehmungen (76) und der Höhe der Tragelemente (42) zwischen den Auslegern (40).

8. Mittel nach einem der vorangehenden Ansprüche, **dadurch gekennzeichnet, dass** die Tragelemente (42) in Leichtbauweise aus Leichtmetall oder aus einem faserverstärkten Kunststoff hergestellt sind.

9. Mittel nach einem der vorangehenden Ansprüche, **dadurch gekennzeichnet, dass** die Tragelemente (42) in Sandwich-Bauweise hergestellt sind und eine Schicht aus einem geschäumten Werkstoff zwischen mindestens zwei Deckschichten umfassen.

10. Mittel nach Anspruch 9, **dadurch gekennzeichnet, dass** der geschäumte Werkstoff ein Leichtmetallschaum oder ein Hartschaum ist und dass die Deckschichten aus Leichtmetall oder aus faserverstärktem Kunststoff bestehen.

11. Mittel nach Anspruch 9 oder 10, **dadurch gekennzeichnet, dass** der geschäumte Werkstoff von einem starr mit den Deckschichten (104) verbundenen Rahmen (106) umgeben ist.

12. Transportmittel, **gekennzeichnet durch** Mittel zur Verbreiterung des Transportmittels nach einem der vorangehenden Ansprüche, wobei die Ausleger (40) über entgegengesetzte Seiten des Trägers (24) überstehend am Träger (24) montiert und die Tragelemente (42) in die gegenüberliegenden Ausnehmungen (76) zweier benachbarter Ausleger (40) eingeschoben sind.

13. Transportmittel nach Anspruch 12, **dadurch gekennzeichnet, dass** der Träger (24) teleskopierbar ist und mindestens einen Innen- und Außenträger (30, 26) umfasst, und dass die Ausleger (40) sowohl am Innen- und Außenträger (30, 26) montiert sind.

14. Transportmittel nach Anspruch 12, **dadurch gekennzeichnet, dass** der Träger nicht teleskopierbar ist.

15. Transportmittel nach einem der Ansprüche 12 bis 14, **dadurch gekennzeichnet, dass** das Transportmittel eine Baggerbrücke ist.

## Claims

1. Means to widen a transport device, having a plurality of cranked arms, which can be mounted spaced apart on opposite sides of a girder of the transport device, so that they protrude the girder sidewardly, having a plurality of girder elements, which can be inserted between adjacent arms, **characterized in that** the arms (40) comprise a I-profile with two recesses (76) being arranged on both sides of a middle bar (70) and being open at opposite sides and being trough-shaped, and that the girder elements (42) can be inserted from the outside in the oppositely arranged recesses (76) of two adjacent arms (40).

2. Means according to claim 1, **characterized in that** the arms (40) are formed as a single piece and can be connected in two different mounting orientations with the girder (24) of the transport device (20), where the upper sides of the girder elements (42) have got different heights.

3. Means according to claim 1 or 2, **characterized in that** the arms (40) comprise a fixing part (66), which can be connected with the girder (24) positivelockingly,

4. Means according to claim 3, **characterized in that** the fixing part (66) comprises a upwardly and a downwardly projecting protrusion (90, 92) with a non-round cross section, whereby, when connecting the arm (40) with the girder (24), the upwardly projecting protrusion is received in an upper mounting (44) and the downwardly projecting protrusion (92) is received in a lower mounting (46) of the girder (24) having a complementary non-round opening cross section.

5. Means according to one of the previous claims, **characterized by** a fixation unit for fixing the girder elements (42) mounted in the recesses (76) at at least two different distances from the girder (24).

6. Means according to claim 5, **characterized in that** the fixation units comprise passage openings (110) at opposite ends of the girder elements (42), at least two further passage openings (78) provided at different distances from the girder (24) in a middle bar (70) of each arm (40) defining the recesses (76) as well as a plurality of fixing bolts (112), which can be put through two passage openings (110) of adjacent girder elements (42) and a further passage opening (76) arranged therebetween.

7. Means according to one of the previous claims, **characterized in that** the heights of the girder elements (42) between the arms (40) is smaller than the heights of the recesses (76) of said arms (40) and that on the lower sides of opposite ends of the girder element (42) bands (102) protruding downwardly or protrusions are provided, the heights of which is slightly smaller than the difference between the heights of the recesses (76) and the heights of the girder elements (42) between the arms (40).

8. Means according to one of the previous claims, **characterized in that** the girder elements (42) build in a light-weight construction of light metal or of fiber-reinforced plastics,

9. Means according to one of the previous claims, **characterized in that** the girder elements (42) are made in a sandwich construction and comprise a layer of expanded material between at least two surface layers.

10. Means according to claim 9, **characterized in that** the expanded material is a high-expansion foam or a rigid foam and that the surface layers are made of light metal or of fiber-reinforced plastics.

11. Means according to claim 9 or 10, **characterized in that** the expanded material is surrounded by a frame (106) rigidly connected with the surface layers (104).

12. Transport device, **characterized by** means for widening the transport device according to one of the previous claims, whereby the arms (40) are mounted on the girder (24) protruding the girder (24) at opposite sides and the girder elements (42) are inserted into oppositely arranged recesses (76) of two adjacent arms (40).

13. Transport device according to claim 12, **characterized in that** the girder (24) can be telescoped and comprises at least one inner and one outer girder (30, 26), and that the arms (40) are mounted as well as on the inner girder and on the outer girder (30, 26).

14. Transport device according to claim 12, **characterized in that** the girder cannot be telescoped.

15. Transport device according to one of the claims 12 to 14, **characterized in that** the transport device is an excavator bridge.

## Revendications

1. Moyen servant à élargir un moyen de transport, comprenant une multitude d'avant-bras coudés, qui peuvent être montés à distance les uns des autres au niveau de côtés opposés d'un support du moyen de transport si bien qu'ils dépassent latéralement du support, comprenant également une multitude d'éléments porteurs, qui peuvent être insérés respectivement entre deux avant-bras adjacents, **caractérisé en ce que** les avant-bras (40) comprennent un profil en I pourvu de deux évidements (76) de forme annulaire disposés de part et d'autre d'un élément de liaison central (70), ouverts vers des côtés opposés, et **en ce que** les éléments porteurs (42) peuvent être enfilés, par leurs extrémités opposées, depuis l'extérieur, dans les évidements (76) se faisant face de deux avant-bras (40) adjacents.

2. Moyen selon la revendication 1, **caractérisé en ce que** les avant-bras (40) sont réalisés d'un seul tenant et peuvent être reliés au support (24) du moyen de transport (20) dans deux directions de montage différentes, dans lesquelles les côtés supérieurs des éléments porteurs (42) présentent respectivement différentes hauteurs.

3. Moyen selon la revendication 1 ou 2, **caractérisé en ce que** les avant-bras (40) présentent une partie de fixation (66), qui peut être reliée par complémentarité de forme au support (24).

4. Moyen selon la revendication 3, **caractérisé en ce que** la partie de fixation (66) comprend des parties faisant saillie (90, 92), une dépassant vers le haut et une dépassant vers le bas, pourvues d'une section transversale non arrondie, dans lequel lors de la liaison de l'avant-bras (40) au support (24), la partie faisant saillie dépassant vers le haut est reçue dans une fixation (44) supérieure et la partie dépassant vers le bas (92) est reçue dans une fixation (46) inférieure du support (24) par une section transversale d'ouverture non arrondie complémentaire.

5. Moyen selon l'une quelconque des revendications précédentes, **caractérisé par** des systèmes de blocage servant à bloquer les éléments porteurs (42) enfilés dans les évidements (76) à au moins deux distances différentes par rapport au support (24).

6. Moyen selon la revendication 5, **caractérisé en ce que** les systèmes de blocage comprennent des ouvertures de passage (110) au niveau des extrémités opposées des éléments porteurs (42), au moins deux autres ouvertures de passage (78) disposées à des distances différentes par rapport au support (24) dans un élément de liaison central (70) délimitant les évidements (76) de chaque avant-bras (40), ainsi qu'une multitude de boulons de blocage (112), qui peuvent être enfichés à travers deux ouvertures de passage (110) d'éléments porteurs (42) adjacents et à travers une autre ouverture de passage (78) disposée de manière intercalée.

7. Moyen selon l'une quelconque des revendications précédentes, **caractérisé en ce que** la hauteur des éléments porteurs (42) entre les avant-bras (40) est inférieure à la hauteur des évidements (76) des avant-bras (40), et **en ce que** des baguettes (102) ou des parties faisant saillie dépassant vers bas sont installées au niveau des côtés inférieurs des extrémités opposées des éléments porteurs (42), dont la hauteur est légèrement inférieure à la différence entre la hauteur des évidements (76) et la hauteur des éléments porteurs (42) entre les avant-bras (40).

8. Moyen selon l'une quelconque des revendications précédentes, **caractérisé en ce que** les éléments porteurs (42) sont fabriqués selon un mode de construction légère à partir d'un métal léger ou à partir d'une matière plastique renforcée par des fibres.

9. Moyen selon l'une quelconque des revendications précédentes, **caractérisé en ce que** les éléments porteurs (42) sont fabriqués selon un mode de construction en sandwich et comprennent une couche composée d'un matériau expansé entre au moins deux couches de recouvrement.

10. Moyen selon la revendication 9, **caractérisé en ce que** le matériau expansé est une mousse en métal léger ou une mousse dure, et **en ce que** les couches de recouvrement sont constituées d'un métal léger ou d'une matière plastique renforcée par des fibres.

11. Moyen selon la revendication 9 ou 10, **caractérisé en ce que** le matériau expansé est entouré d'un cadre (106) relié de manière rigide aux couches de recouvrement (104).

12. Moyen de transport, **caractérisé par** des moyens servant à élargir le moyen de transport selon l'une quelconque des revendications précédentes, dans lequel les avant-bras (40) sont montés au niveau du support (24) de manière à dépasser de côtés opposés du support (24), et en ce que les éléments porteurs (42) sont enfilés dans les évidements (76) se faisant face de deux avant-bras (40) adjacents.

13. Moyen de transport selon la revendication 12, **caractérisé en ce que** le support (24) est télescopique et comprend au moins un support intérieur et un support extérieur (30, 26), et **en ce que** les avant-bras (40) sont montés aussi bien au niveau du support intérieur que du support extérieur (30, 26).

14. Moyen de transport selon la revendication 12, **caractérisé en ce que** le support n'est pas télescopique.

15. Moyen de transport selon l'une quelconque des revendications 12 à 14, **caractérisé en ce que** le moyen de transport est un pont à excavateur.
